# EUROPEAN PATENT SPECIFICATION

(11) **EP 0 269 583 B1**
(45) Date of publication and mention of the grant of the patent: **23.06.1993**
(21) Application number: 87830402.1
(22) Date of filing: 12.11.1987
(51) Int. Cl.: C08G 63/78, C08G 63/90, C08G 63/80

(54) **A method for producing high molecular weight polyester resin**
Verfahren zur Herstellung von hochmolekularen Polyesterharzen
Méthode de préparation de résines de polyesters de haut poids moléculaire

(30) Priority: 21.11.1986 IT 2242486
(43) Date of publication of application: 01.06.1988
(73) Proprietor: COBARR S.p.A., I-03012 Anagni Frosinone (IT)
(72) Inventor: Al Ghatta, Hussain Ali-Kashif, I-03014 Fiuggi Frosinone (IT)
(74) Representative: Perani, Aurelio

(56) References cited:
- EP-A- 0 227 608
- EP-A- 0 300 981
- DE-A- 3 323 940
- US-A- 4 161 578

## Description

This invention relates to a method for producing high molecular weight polyester resin, wherein granules of resin, in particular of polyethyleneterephtalate, are subjected to solid state polycondensation.

High molecular weight polyester resins have been produced in the solid state at a lower temperature than the polymer melting temperature and either under a vacuum or an inert gas atmosphere. Such prior methods require, preparatory to polycondensation, partial or total crystallization of the granules under agitation, for example in either rotary units under vacuum or fluidized bed units, in order to prevent the granules from becoming stuck during polymerization. In fact, such sticking may turn the granules into a single lump, bringing the plant to a standstill. Methods of this type are disclosed in US-A-4,064,112 and 4,161,578.

Because of the tendency of granules of low-melting amorphous polyester to become "tacky" and stick to one another, the granules of amorphous polymer in the methods disclosed in the above-mentioned patents need to be forcibly stirred at a first crystallization stage before the granules can be passed to a solid state polycondensation stage on a fixed bed.

That the polyester granules must be stirred at a stage preceding the polycondensation stage is the cause for releasing large amounts of polymer dust and a high power consumption. The polymer dust, as produced by fretting of the mechanical stirring devices against the granules and between granules, may create serious problems at the succeeding polycondensation stage, and the mechanical stirring devices are often a cause for stopping the plant either for servicing purposes or on account of malfunction of the stirrers, which are subjected to high mechanical stresses.

It is the object of this invention to provide a method which is free of the aforementioned problems and can be implemented in a simple and economical manner.

This object is achieved by that the method comprises the step of treating the granules, prior to polycondensation, with carbon dioxide in a supercritical condition.

With these provisions, the amorphous polyester granules are effectively prevented from sticking to one another during the solid state polycondensation on a fixed bed.

The granules of amorphous polyester are preferably subjected to an atmosphere containing supercritical carbon dioxide at a pressure in excess of 25 bars and at a lower temperature than the polymer melting temperature (approximately 240°C) for a sufficient time period to enable access to the polycondensation step without any risk of the granules becoming stuck together. This treatment time is normally in the range of 0.5 to 5 hours.

A further advantage of the method according to the invention is that the amount of acetaldehyde present in the granules and the rate of acetaldehyde formation in the granules can be lowered. This significant side effects seemingly arise from that the carbon dioxide extracts the acetaldehyde from the granules and deactivates the catalysts in the granules themselves.

Succeedingly, the solid state polycondensation is carried out at a temperature within the range of 180°C to 240°C, preferably of 200°C to 230°C. Carbon dioxide, or another inert gas such as nitrogen, can be advantageously used at the polycondensation stage in a ratio of 0.4-3 kg/hour inert gas per kg/hour granules.

Further advantages and additional features of the method according to this invention will be more clearly understood from the following Example, which should in no way be construed as resctictive of the invention.

### Example

Into an autoclave equipped with a thermal exchange jacket (crystallization stage), there have been fed 50 kg/hour PET granules having an inherent viscosity of 0.62 and an acetaldehyde content of 120 ppm. From the autoclave, the granules were fed into a polycondensation stage (heated tube reactor), whence PET granules were extracted having an inherent viscosity of 0.82.

The conditions for the crystallization stage were as follows:

| | |
|---|---|
| Temperature | 100°C |
| Pressure | 85 bars |
| Residence time of the granules | 1 hour |

Into the crystallization stage there has been fed, countercurrently to the granules, 20 kg/hour CO₂ at 180°C which, after being contacted with the granules, was sent to a purifier unit and thence cycled back to the crystallization stage.

Into the polycondensation stage, there has been fed in countercurrent 150 kg/hour CO₂ at a pressure of 1.2 bars and a temperature of 230°C; the residence time of granules in the polycondensation stage was 20 hours. Similarly to the crystallization stage, the CO₂ coming out from the polycondensation stage was cycled back following purification of the volatile substances formed during the polycondensation.

The PET granules yielded by the polycondensation stage had an acetaldehyde content of 0.4 ppm and an acetaldehyde generation rate at 270°C of 0.25 ppm acetaldehyde/minute.

Note is made that, contrarywise to what has been accomplished heretofore, no stirring had to be supplied in the crystallization autoclave to prevent the granules from becoming stuck or adhere together.

## Claims

1. A method of preparing high molecular weight polyester resin, wherein resin granules, in particular granules of polyethyleneterephtalate, are subjected to solid state polycondensation on a fixed bed, characterized in that it comprises the step of treating the granules, prior to polycondensation, with carbon dioxide in a supercritical condition.

2. A method according to Claim 1, characterized in that said treatment is carried out on a fixed bed.

3. A method according to any of the preceding claims, characterized in that the carbon dioxide treatment temperature is within the range of 31°C to 240°C.

4. A method according to any of Claims 1 to 4, characterized in that the time duration of the carbon dioxide treatment varies between 0.5 and 5 hours.

5. A method according to any of Claims 1 to 4, characterized in that polycondensation is carried out in a carbon dioxide atmosphere.

## Patentansprüche

1. Verfahren zur Herstellung eines hochmolekularen Polyesterharzes, wobei ein Harzgranulat, im besonderen ein Granulat von Polyethylenterephthalat, einer Polykondensation im festen Zustand auf einem Festbett ausgesetzt wird, dadurch gekennzeichnet, daß das Verfahren einen Schritt enthält, um das Granulat vor der Polykondensation mit Kohlendioxid im superkritischen Zustand zu behandeln.

2. Verfahren gemäß Anspruch 1, dadurch gekennzeichnet, daß die Behandlung in einem Festbett erfolgt.

3. Verfahren gemäß irgendeinem der bisherigen Ansprüche, dadurch gekennzeichnet, daß die Kohlendioxid-Behandlungstemperatur im Bereich von 31°C bis 240°C liegt.

4. Verfahren gemäß irgendeinem der Ansprüche 1 bis 4, dadurch gekennzeichnet, daß sich die Zeit der Kohlendioxidbehandlung zwischen 0,5 und 5 Stunden ändert.

5. Verfahren gemäß irgendeinem der Ansprüche 1 bis 4, dadurch gekennzeichnet, daß die Polykondensation in einer Kohlendioxidatmosphäre ausgeführt wird.

## Revendications

1. Procédé pour la préparation d'une résine polyester à masse moléculaire élevée, dans lequel des granulés de résine, en particulier des granulés de polyéthylène téréphtalate, sont soumis à une polycondensation à l'état solide sur un lit fixe, caractérisé en ce qu'il comprend l'opération consistant à traiter les granulés, avant la polycondensation, avec du dioxyde de carbone à l'état supercritique.

2. Procédé selon la revendication 1, caractérisé en ce que ledit traitement est effectué sur un lit fixe.

3. Procédé selon l'une quelconque des revendications précédentes, caractérisé en ce que la température du traitement au dioxyde de carbone est dans la gamme de 31°C à 240°C.

4. Procédé selon l'une quelconque des revendications 1 à 4, caractérisé en ce que la durée du traitement au dioxyde de carbone varie entre 0,5 et 5 heures.

5. Procédé selon l'une quelconque des revendications 1 à 4, caractérisé en ce que la polycondensation est effectuée dans une atmosphère de dioxyde de carbone.
